(19)

Europäisches
Patentamt
European
Patent Office
Office européen
des brevets

(11) **EP 2 139 262 A1**

(12) **EUROPEAN PATENT APPLICATION**

(43) Date of publication:
**30.12.2009 Bulletin 2009/53**

(51) Int Cl.:
***H04Q 11/00*** *(2006.01)*

(21) Application number: **08104523.9**

(22) Date of filing: **24.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nokia Siemens Networks OY**
**02610 Espoo (FI)**

(72) Inventors:
• **Freire, Mario Marques**
  **6200-330 Covilha (PT)**

• **Garcia, Nuno**
  **Esq. 6200-502 (PT)**
• **Lenkiewicz, Przemyslaw**
  **2770-137 Paco de Arcos (PT)**
• **Monteiro, Paulo Miguel**
  **3930-209 Ilhavo (PT)**
• **Santos, Jose**
  **1750-430 Lisboa (PT)**

(74) Representative: **Bruglachner, Thomas E.**
  **Nokia Siemens Networks GmbH & Co. KG**
  **COO RTP IPR / Patent Administration**
  **80240 München (DE)**

(54) **Method and device for processing data in an optical network and communication system comprising such device**

(57) A method and a device are provided for processing data in an optical network comprising several nodes, wherein at least one control packet is transmitted from one node to another node, said control packet comprising reservation information for optical data to be conveyed through the network, wherein said at least one control packet is routed according to a transmission matrix. Furthermore, a communication system comprising such a device is suggested.

**Fig.1**

## Description

The invention relates to a method and to a device for processing data in an optical network and to a communication system comprising such a device.

Optical Burst Switching (OBS) is a networking paradigm that promises high speed and versatility for next generation optical networks and it is envisaged as a feasible alternative for an all-optical packet switching network.

OBS is a compromise between Optical Circuit Switching (OCS) and Optical Packet Switching (OPS) approaches, and may utilize various signaling protocols. OBS comprises in particular the following characteristics:

a. Granularity:

The size of a transmission unit in OBS networks is between the sizes of those utilized in an OCS and an OPS network.

b. Data and control separation:

A control information is transmitted via a separate channel.

c. Unidirectional or Bidirectional reservation:

Resources are reserved using an unidirectional messaging system (assuming an one-way reservation scheme) or using a two-way reservation scheme similar to circuit-switching scenarios.

d. Burst with variable size:

The size of each burst may vary.

e. No buffering of data:

Once the data burst is initiated or sent, it reaches its destination within a delay period inherent to the medium, e.g., a propagation delay of the signal being conveyed via the optical fiber (assuming that no limited buffers (e.g. fiber delay lines) are used).

Reservation of networks resources such as wavelength converters or available data channels (λ-channels), is done at the nodes by messaging protocols. Examples are one-way reservation protocols like "Tell-and-Go" (TAG-OBS) or two-way reservation protocols like "Tell-and-Wait" (TAW-OBS).

The one-way reservation protocol is faster than the two-way reservation protocol as it does not have to wait for an acknowledgment message. However, the one-way reservation protocol experiences significant problems like a high burst loss probability when network traffic increases. The two-way reservation protocol requires a longer setup time, but offers a lower burst loss probability since the burst can be sent through the network only when all the necessary resources are known to be available.

Another characteristic of OBS networks is that there is a tendency to deploy as much logic as possible or deemed appropriate at the edge nodes instead of using every node in the network for logical processing. This leads to some restrictions as the information in the core nodes is used individually, and the network does not benefit as a whole from the experiences of individual core nodes.

WO 2006/072406 suggests a common control channel "C3-OBS" approach utilizing broadcasting control packets.

However, existing solutions bear the disadvantages that a high burst loss ratio is inherent to non-traffic aware architectures such as plain OBS and that a large number of control packets need to be generated and transmitted in the C3-OBS approach thereby resulting in a large amount of overhead traffic.

The **problem** to be solved is to overcome the disadvantages stated above and in particular to provide an efficient approach for a cooperative control architecture in an optical burst switching network scenario.

This problem is solved according to the features of the independent claims. Further embodiments result from the depending claims.

In order to overcome this problem, a method is provided for processing data in an optical network comprising several nodes, wherein at least one control packet is transmitted from one node to another node, said control packet comprising reservation information for optical data to be conveyed through the network, wherein said at least one control packet is routed according to a transmission matrix.

In an embodiment, the transmission matrix comprises information as how to reach a destination node via an adjacent node.

The optical network may in particular comprise several nodes, wherein some nodes are edge nodes to adjacent networks and/or components of other networks.

In another embodiment, the at least one control packet is conveyed via a control channel.

In a further embodiment, said at least one control packet is conveyed via a control channel by means of a broadcast tree.

In a next embodiment, a receiving node in the optical network replicates and/or broadcasts the at least one control packet to at least one other node, in particular by utilizing said broadcast tree.

It is also an embodiment that a local network model is associated with and/or implemented in the node, wherein said local network model is updated by the at least one control packet.

Pursuant to another embodiment, a travel agency algorithm is used to determine a suitable route providing available resources for said optical data to be conveyed through the optical network.

Said travel agency algorithm in particular utilizes the local network model provided with the nodes of the optical network.

According to an embodiment, the local network model is processed and/or checked before a burst is transmitted via the optical network, in particular by assessing a departure horizon of said optical data.

This can be done in particular by the travel agency algorithm. Checking the possible paths may be processed prior to allocating such paths. After such allocation, the optical burst may be launched from an ingress node of the optical network towards an egress node of the optical network, wherein said ingress and egress nodes may be connected by said path via at least one additional node of the optical network.

This approach allows a high degree of availability of the network resources for such burst.

According to another embodiment, said at least one control packet is generated pursuant to a travel agency algorithm allocating a path through the optical network.

In yet another embodiment, the optical network comprises an ingress node and an egress node, wherein said optical data is to be transmitted from the ingress node to the egress node in particular via at least one further node of the optical network.

According to a next embodiment, said optical network is an optical burst switching network.

The problem stated above is also solved by a device comprising a and/or being associated with a processor unit and/or a hard-wired circuit and/or a logic device that is arranged such that the method as described herein is executable thereon.

According to an embodiment, the device is a or is associated with a communication device, in particular an optical network component.

The problem stated supra is further solved by a communication system comprising the device as described herein.

Embodiments of the invention are shown and illustrated in the following figures:

Fig.1    shows a sample topology of an optical burst switching network comprising optical network components or nodes K1 to K6;

Fig.2    shows an evolution of a degree of information regarding a network-awareness at a node of an optical network.

The approach provided herewith, in particular referred to as "C2-OBS", suggests implementing a traffic-aware version of the plain OBS paradigm. Hence, C2-OBS disseminates reservation information contained in each of the burst's control packets throughout the network, utilizing in particular a Cooperative Control Transmission Matrix (CCTM).

This Cooperative Control Transmission Matrix is the incidence matrix for a Broadcast Tree (BT) used by each node to replicate and forward control packets received at such node. Preferably, a CCTM is provided for each node.

The information each node receives with the replicated control packets is reflected in a Local Network Model (LNM) that is known from C3-OBS as described in [1]. This LNM then allows the node, e.g., by querying, to decide on the availability of a given set of resources needed for a certain burst transmission.

In particular, the following technical features in C2-OBS provide network awareness:

a. The control packets (CPs) are forwarded to nodes in a way that prevents them from simply flooding the network. Such forwarding mechanism is not limited to nodes that may actually use the information provided by the CPs. The CPs are in particular routed by means of said CCTM, which is preferably defined for each node of the network.

b. A broadcast tree (BT) is defined for the propagation of the CPs via a control channel, in which each node may replicate and broadcast the CPs to other nodes.

c. A Local Network Model (LNM) is preferably associated with and/or implemented in each node, and is updated with the reservation information of the CPs. The LNM is queried before a burst is issued into the network to ensure a high degree of availability of the network resources required for such burst.

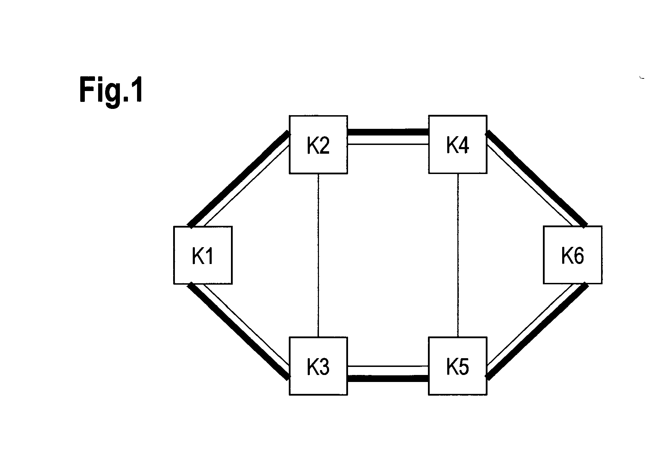

**Fig.1** shows a sample topology of an optical burst switching network comprising optical network components or nodes K1 to K6.

The nodes are connected with one another as follows:

| node | is further connected with node |
|---|---|
| K1 | K2, K3 |
| K2 | K3, K4 |
| K3 | K5 |
| K4 | K5, K6 |
| K5 | K6 |

A sample broadcast tree for the topology shown in Fig.1 could be as follows:

| Source | Destination | Broadcast Path |
|---|---|---|
| K1 | K2 or K3 or K4 or K5 or K6 | K1→K2,  K1→K3, K2→K4,  K3→K5, K4→K6 |
| K2 | K1 or K3 or K4 or K5 or K6 | K2→K1,  K2→K3, K2→K4,  K3→K5, K4→K6 |
| K3 | K1 or K2 or K4 or K5 or K6 | K3→K1,  K3→K2, K2→K4,  K3→K5, K4→K6 |
| K4 | K1 or K2 or K3 or K5 or K6 | K4→K2,  K2→K1, K2→K3,  K4→K5, K4→K6 |
| K5 | K1 or K2 or K3 or K4 or K6 | K5→K3,  K3→K1, K5→K4,  K4→K2, K5→K6 |
| K6 | K1 or K2 or K3 or K4 or K5 | K6→K4,  K4→K2, K2→K1,  K6→K5, K5→K3 |

An according Cooperative Control Transmission Matrix for node K1 of the broadcast tree above is:

| S/D | K1 | K2 | K3 | K4 | K5 | K6 |
|---|---|---|---|---|---|---|
| K1 | | 1 | 1 | | | |
| K2 | | | | 1 | | |
| K3 | | | | | 1 | |
| K4 | | | | | | 1 |
| K5 | | | | | | |
| K6 | | | | | | |

"S/D" refers to source/destination addresses.

Hence, pursuant to the broadcast tree provided, node K2 (destination) can be reached via node K1 (source). The same applies to node K3. Node K4 (destination) can be reached via node K2 (source), node K5 via node K3 and node K6 via node K4.

According to the examples provided, the CPs are conveyed via the network at node and link speed, and thus the order depicted is only exemplary and may differ according to the respective environment.

The implementation of the architecture provided may be achieved by utilizing

- said Sample Cooperative Transmission Matrix that allows the CPs to be delivered to all nodes in the network,
- the Local Network Model that allows the maintenance of a data structure for each node reflecting the state of the requests in the network, and
- by a Travel Agency Algorithm that queries the Local Network Model to find the shortest route that provides available resources for the burst transmission.

In particular, the Local Network Model and the Travel Agency Algorithm will be described in more detail hereinafter.

Local Network Model (LNM)

The C2-OBS architecture suggested features a propagation matrix for the control packets (CPs) in order to disseminate the information contained to the nodes of the network.

By using such propagation matrices, each node in the network receives the signaling information coded within the CPs at a delay based on an interpretation of the respective CP at the node as well as the duration for conveying the signal over the fiber. With such delay being negligible, each one of the nodes has a synchronized Local Network Model (LNM).

The Local Network Model (LNM) is an extension of an OBS resource reservation status database. The data model, which complexity depends on the complexity of the signaling protocol, is extended as to record the reservation status in particular for all nodes of the network. The LNM is updated with the information provided by the CPs that are distributed pursuant to the propagation matrices stored with the nodes of the network.

Utilizing the LNM, each node may keep track of the network condition and performance as well as of the resource reservation status throughout the network, thus allowing each node to assess the predicable availability of its adjacent resources and, e.g., to decide about a path or a next hop for a particular burst on its way to an egress node. Hence, each node can be aware of the states of the network by means of said LNM.

The complexity of the local database may be directly related to the complexity of the signaling protocol, i.e., for just-in-time applications, the local database can be reduced to an array of time values for each wavelength per output fiber, while the implementation of void filling signaling protocols implies the operation of a list in order to correctly calculate a duration required for each wavelength in the output fibers.

The size of the database may be kept small, as the information required is based on future requests, so the database is expected to manage the requests of the network in a time window smaller than one second, possibly in the order of a few hundreds of milliseconds. In another words, the database does not need to provide any information regarding a history of the burst transmission.

Each ingress optical burst request triggers a query to the LNM at the ingress node. Upon such request, the algorithm managing the LNM (such algorithm is referred to as "Travel Agency" algorithm, see below) tries to find the least cost path available, wherein cost may be a synonym for path length or for a path with a least configuration effort or of whichever criteria applicable for defining a suitable path for a burst.

The query to the LNM may be triggered by a control message of a client node in the ingress node as soon as the first packet enters the burst creation queue at the client node (the burst assembly machine). At that time, most of the characteristics of the burst may be well defined, i.e., the burst destination, the burst priority, and to a reasonable extent, the burst estimated departure time and/or the burst estimated size.

Hence, advantageously the burst assembly process (at the burst assembly machine) may run in parallel with the query launched towards the LNM.

The degree of complexity regarding the operation of the LNM may be minimized using two rules:

(i) Upon request of a new burst for a route, a depth of searches of available paths between two nodes may be limited. Although this rule may be seen as too restrictive, the higher the number of searchable paths, the longer the paths will be, thus bursts will end up crossing more nodes, demanding more routing operations and occupying more network resources. Even more important than the number of possible paths is their degree of separation, i.e., the least two paths have in common, the more homogeneously the traffic will be distributed over the network links.

(ii) The second rule is to limit the extent of the analysis of availability of the resources by limiting the possible departure time of the burst. Such time is referred to as "Departure Horizon" and in case it amounts to 0, either the resources were available for reservation at the time the burst is ready and thus the reservation was successful, or if the resources were not available for reservation, the burst is dropped although the resources may be available shortly thereinafter.

With an increased time for the Departure Horizon, the algorithm managing the LNM may try to schedule the burst as soon as any route allows it, up until the Departure Horizon time value, i.e., the Travel Agency Algorithm (TAA) will assess the availability of network resources on each path for the initial departure time in the interval of [to, $t_0$+DH] (DH being said Departure Horizon and to being the estimated burst departure time). In this case, the burst may be kept in the client node, which in turn may decide to retry its ingress (eventually continuing the burst assembly process) or to drop it.

The setting of both rules mentioned above, i.e., the number of paths to be searched for to a small value and the Departure Horizon to zero (or close to zero) limits the depth of the search on control data structures in the LNM.

Advantageously, the LNM only keeps records of the scheduled reservation requests until the burst has been transmitted. Hence, the amount of information stored at the LNM will cover a very short time interval, typically only a duration of a few milliseconds.

The approach provided may utilize or implement a variety of resource reservation protocols, either using void filling or not, either using immediate or delayed reservation. As all the decisions may be made locally, a reservation protocol may be selected according to its complexity in view of the size and the complexity of operation of the LNM.

The Travel Agency Algorithm (TAA)

The TAA may be used to manage a Signaling Engine (SE) in an Optical Cross Connect (OXC). The TAA acts like a travel agent, selecting the best travel options for each of its customers, i.e. bursts to be conveyed through the network.

The TAA may be realized as an adaptation of fixed source routing algorithms in a way that each burst ingress request receives a response with a route that is calculated for its particular characteristics, or if no route is available, it receives the information of no availability of resources.

For example, if the burst cannot ingress the network, this means that the k least cost paths the TAA is authorized to scan are not available for the burst transit at the time intended for its departure, added with the margin of the defined Departure Horizon.

On the other hand, if a burst is allowed to enter the network, its travel path may be different from the one that was assigned to the previous burst with the same priority and ingress-egress addresses and it will only be dropped if there is a Concurrent Control Packet scenario, created either naturally or forced by the ingress of some burst of higher priority.

Preferably, the TAA does not make any assumption regarding the signaling protocol utilized in the network. Instead, the TAA handles the LNM according to the signaling protocol chosen. A main feature of the TAA may be that the routing table is assessed for network resource availability each time a burst ingress request is received.

For each burst ingress request, the TAA may assess an availability of the network resources for the desired departure time, for the k shortest paths. The first path whose resources are available for the ingress request may be preferably reserved for that burst, a process that results in a creation of the burst's correspondent CP. If a non-zero Departure Horizon is allowed, the k shortest paths are ranked in order of their earliest availability and the first one is tagged for reservation and used in the CP creation.

Well-informed nodes and degree of network awareness of the nodes

There is a minimum time until the LNM is aware of the burst that are planned to transit the network.

Since one the advantage of the C2-OBS approach is to achieve a very low burst loss due to the implementation of the "network awareness" at each node, which allows for a more efficient decision making process at the edge nodes as well as the core nodes, it is preferably defining a duration of this time horizon until the nodes are deemed to be "well-informed".

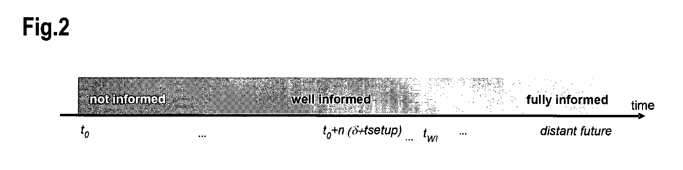

**Fig.2** shows an evolution of the degree of information regarding a network-awareness at a node of the optical network.

For any given time $t_k$, the time $t_{wi}$ until the node will be "well-informed" amounts to

$$T_{wi} > t_k + n\ (\delta + T_{Setup})$$

wherein n is a largest number of hops a control packet may experience until it is replicated throughout the network (also referred to as Network Control Diameter - NCD), δ is a delay of the link (considered as the average delay of all links), and $T_{Setup}$ is the time each node needs to O/E the CP, interpret it and E/O convert it again.

According to the propagation matrix definition, the NCD may also be regarded as a maximum number of non-zero lines in all the propagation matrices.

In a distant future ($t_k >> t_{wi}$) the node is therefore considered to be "fully informed" (see Fig.2), because then it may schedule bursts with a full knowledge regarding the network reservation status.

The better the node is informed about the current network status, the better its routing decisions will be. Nevertheless, it is important to keep the data structures and decision algorithms to a minimum in order to reduce an effort imposed on the network equipment logic.

As an example, at a given time to, the node K1 and the node K6 (see Fig.1) decide to schedule bursts that have to travel between them without any collision since said bursts travel in opposite directions (assuming shortest path is chosen, respectively). Further, a burst from node K1 to node K6 departs at a time $t_1$ and a burst from node K6 to node K1 departs at a time $t_2$. If these times are to be optimal, they correspond to the aforementioned considerations and, for instance, in a TAG (Tell-and-Go) scenario, $t_1$ and $t_2$ may amount to

$$t_1, \; t_2 > t_0 + n \; T_{Setup} + T_{OXC}.$$

The degree of network status awareness of each node at each of these times is expressed as follows: At time to, only node K1 knows it will send a burst with destination to node K6 (likewise, node K6 in regard of the burst destined to node K1). However, at time

$$t_3 = t_0 + n(\delta + T_{Setup})$$

(n is the NCD and δ is the time the CP takes to travel the longest link), all the nodes in the network know of these two transmissions, since this is the maximum time the CP takes to reach all nodes.

Hence, any decisions made by the nodes up until said time to are known to all nodes at the time $t_3$. As a consequence, the more the bursts are scheduled in the future, the higher the probability that the bursts traverse the network without hitting on necessary network resources that have already been reserved.

Thus, for any given time $t_k$, if a node tries to schedule a burst to a time after $t_k + n(\delta + T_{Setup})$, it is likely to have all the information needed to decide whether the operation is feasible at that time. At such time, the given node is therefore considered to be "well-informed" and the delay until the node is well-informed is referred to as $t_{wi}$ (see Fig.2).

If the network is well informed, i.e., if edge routers of the network are aware of the states of network resources, they are able to send bursts and control packets associated with said bursts into the network without a $T_{Offset}$ delay, provided that the resources in the path nodes are already configured and available. In this case, the burst may be sent not using a "shortest path" criterion, but following the route with a "no configuration needed on nodes" criterion. Other strategies that may decrease standard $T_{Offset}$ delay may reflect that some nodes along the path are already configured and so the path chosen can be, e.g., a "lesser occupied node route", a "fewer wavelength conversion route" etc.

In case a burst has already departed from its ingress node it may get lost when at least two nodes simultaneously try scheduling bursts via the same network resources over the same time period. Hence, two causes for burst loss may be:

(i) Pursuant to a huge size of the network the LNMs cannot be updated in reasonable time;
(ii) The offset time for the burst is smaller than the "well-informed" time.

This can be referred to as a Concurrent Control Packet scenario. The Concurrent Control Packet scenario becomes relevant whenever two (or more) simultaneous reservation requests require the same resources. If the nodes are not well informed, the resource reservation is not simultaneously provided and only one of the bursts may be launched at the time the LNMs are updated. In such scenario, the nodes with its bursts still in the queue may reschedule them to be transmitted at a later time, or a node may decide that a core node in the burst path will apply other routing or buffering techniques to solve the contention (and launch the burst(s) anyway). If the nodes successfully allocated resources and the bursts leave the nodes before the LNMs are updated, i.e., when a set of resources R is registered as free for a given time interval t' at each of the LNMs, then burst collision may probably occur somewhere along the path.

As an example referring to the network of Fig.1, at time to both Nodes K1 and K3 decide to send a burst via the paths {K1 → K2 → K4} and {K3 → K2 → K4} using the same wavelength in the link connecting nodes K2 and K4 at an overlapping time interval. The bursts are predicted to depart from node K1 and from node K3 at the same time $t_1$.

A current time is to and a time $t_1$ amounts to

$$t_1 \le t_0 + 3(\delta + T_{Setup}),$$

being 3 the calculated largest number of hops the control packet has to travel to inform all the nodes in this network (NCD).

In this example, both the burst ingressed at node K1 and the burst ingressed at node K3 will try to concurrently use the only available data channel in the link between nodes K2 and K4. At a time

$$t_0 + \delta + T_{Setup}$$

node K2 will decide to drop one of the bursts, since it has only one data channel to node K4. Also, at the same time, node K1 and node K3 have received the CPs issued by node K3 and by node K1, respectively. So at this time, one of the nodes (the one that has the burst of lower priority or the one with a lower burst loss ratio, or the one that follows some performance metric embedded in the common set of rules that operate the LNM) will reschedule its burst as not to coincide with the occupancy of the link between said nodes K2 and K4. Preferably, node K2 does not need to send a negative acknowledge CP because the burst drop was inferred by the other nodes through the operation of their LNMs.

After a burst has been transmitted, a release of the resources at each node may occur by means of estimated release or explicit release. In the estimated or implicit release scheme, the resources are released as soon as the burst is deemed to be transmitted. The estimation of this time is made based on information conveyed by the CP, namely the estimated time of arrival of the burst and its length. In the explicit release scheme, the edge node issues a new control packet to release the previously reserved network resources.

Further Advantages

In particular, the following advantages result from the C2-OBS networks concept suggested herein:

a. Using both the BT and the LNM, each node is aware of the network resource reservation status for a given time, in particular if such time is bigger than the maximum propagation time for any CP in the network. In C2-OBS, NCD may have to consider the $T_{Setup}$ times for each node the CP must traverse.

b. When a node receives a CP, even when the CP is not destined to that node, it may have to interpret such CP, forward it according to the BT set forth in the node and update its LNM.

This procedure enables the following approach: When a burst is set to enter the network, its ingress node will query the LNM for the available path, resources, and early departure time. The LNM which is updated with the status of the network's resources, returns the earliest and shortest available path for the querying burst. This means that a burst either enters the network, because the network's resource availability has been confirmed by the LNM, and thus the burst is free to use those resources, or the burst does not enter the network because there are no available resources.

The OBS common case where a burst blindly starts crossing the network, and ends up blocked somewhere along the path, is extremely rare in C2-OBS, which means that in C2-OBS the bandwidth is not wasted by bursts which drop before they reach their destinations (and thus occupy resources that could be used to efficiently transmit other bursts).

c. With the LNM it is possible to implement proactive quality-of-service (QoS) mechanisms that turn void previously smaller priority reservations.

d. The LNM allows implementing mechanisms that route effectively in case of network failure, since this architecture does not feature a single point of criticality.

e. This architecture implements its own version of a "broadcast message" principle via the BT, thereby simplifying the architecture of the OXC in the nodes.

f. Using the BT and the LNM, it is possible to implement a new class of cooperative network architecture that features resilience, QoS and routing mechanisms, and thus provides highly efficient network resource usage.

g. The C2-OBS network can be used together with legacy or regular OBS networks, providing that the CP format is compatible. Or, if an LNM in a node fails, the node will still be able to operate, although with reduced efficiency.

**Reference (s) :**

[1] WO 2006/072406 A1

**Abbreviations:**

| BT | Broadcast Tree |
|---|---|
| CCTM | Cooperative Control Transmission Matrix |
| CP | Control Packet |
| LNM | Local Network Model |
| NCD | Network Control Diameter |
| OBS | Optical Burst Switching |
| OCS | Optical Circuit Switching |
| OPS | Optical Packet Switching |
| OXC | Optical Cross Connect |
| QoS | Quality of Service |
| SE | Signaling Engine |
| TAA | Travel Agency Algorithm |

**Claims**

1.  A method for processing data in an optical network comprising several nodes, wherein at least one control packet is transmitted from one node to another node, said control packet comprising reservation information for optical data to be conveyed through the network, wherein said at least one control packet is routed according to a transmission matrix.

2.  The method of claim 1, wherein the transmission matrix comprises information as how to reach a destination node via an adjacent node.

3.  The method according to any of the preceding claims, wherein the at least one control packet is conveyed via a control channel.

4.  The method of claim 3, wherein said at least one control packet is conveyed via a control channel by means of a broadcast tree.

5.  The method according to claim 4, wherein a receiving node in the optical network replicates and/or broadcasts the at least one control packet to at least one other node, in particular by utilizing said broadcast tree.

6.  The method according to any of claims 4 or 5, wherein a local network model is associated with and/or implemented in the node, wherein said local network model is updated by the at least one control packet.

7.  The method according to any of claims 4 to 6, wherein a travel agency algorithm is used to determine a suitable route providing available resources for said optical data to be conveyed through the optical network.

8.  The method according to any of claims 4 to 7, wherein the local network model is processed and/or checked before a burst is transmitted via the optical network, in particular by assessing a departure horizon of said optical data.

9.  The method according to any of the preceding claims, wherein said at least one control packet is generated pursuant to a travel agency algorithm allocating a path through the optical network.

10. The method according to any of the preceding claims, wherein the optical network comprises an ingress node and an egress node, wherein said optical data is to be transmitted from the ingress node to the egress node in particular via at least one further node of the optical network.

11. The method according to any of the preceding claims, wherein said optical network is an optical burst switching network.

12. A device comprising a and/or associated with a processor unit and/or a hard-wired circuit and/or a logic device that is arranged such that the method according to any of the preceding claims is executable thereon.

13. The device according to claim 12, wherein said device is a or is associated with a communication device, in particular a optical network component.

14. Communication system comprising the device according to any of claims 12 or 13.


**Amended claims in accordance with Rule 137(2) EPC.**

1. A method for processing data in an optical network comprising several nodes, wherein at least one control packet is transmitted from one node to another node, said control packet comprising reservation information for optical data to be conveyed through the network, wherein said at least one control packet is routed according to a transmission matrix, wherein the at least one control packet is conveyed via a control channel.

2. The method of claim 1, wherein the transmission matrix comprises information as how to reach a destination node via an adjacent node.

3. The method according to any of the preceding claims, wherein said at least one control packet is conveyed via a control channel by means of a broadcast tree.

4. The method according to claim 3, wherein a receiving node in the optical network replicates and/or broadcasts the at least one control packet to at least one other node, in particular by utilizing said broadcast tree.

5. The method according to any of claims 3 or 4, wherein a local network model is associated with and/or implemented in the node, wherein said local network model is updated by the at least one control packet.

6. The method according to any of claims 3 to 5, wherein a travel agency algorithm is used to determine a suitable route providing available resources for said optical data to be conveyed through the optical network.

7. The method according to any of claims 3 to 6, wherein the local network model is processed and/or checked before a burst is transmitted via the optical network, in particular by assessing a departure horizon of said optical data.

8. The method according to any of the preceding claims, wherein said at least one control packet is generated pursuant to a travel agency algorithm allocating a path through the optical network.

9. The method according to any of the preceding claims, wherein the optical network comprises an ingress node and an egress node, wherein said optical data is to be transmitted from the ingress node to the egress node in particular via at least one further node of the optical network.

10. The method according to any of the preceding claims, wherein said optical network is an optical burst switching network.

11. A device comprising and/or being associated with a processor unit and/or a hard-wired circuit and/or a logic device that is arranged such that the method according to any of the preceding claims is executable thereon.

12. The device according to claim 11, wherein said device is or is associated with a communication device, in particular an optical network component.

13. Communication system comprising the device according to any of claims 11 or 12.

Fig.1

# Fig.2

| not informed | well informed | fully informed | time |

$t_0$ ... $t_0+n\ (\delta+tsetup)$ ... $t_{wi}$ ... distant future

Europäisches
Patentamt
European
Patent Office
Office européen
des brevets

**EUROPEAN SEARCH REPORT**

Application Number

EP 08 10 4523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHING-FANG HSU ET AL: "Performance analysis of deflection routing in optical burst-switched networks" PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 1, 23 June 2002 (2002-06-23), pages 66-73, XP010593563 ISBN: 978-0-7803-7476-8 * paragraph [0003] * | 1-14 | INV. H04Q11/00 |
| A | XIAODONG HUANG ET AL: "Modeling and Performance Analysis of Small Group Multicast with Deflection Routing in Optical Burst Switched Networks" IEEE JOURNAL ON SELECTED AREAS IN COMMUNICATIONS, IEEE SERVICE CENTER, PISCATAWAY, US, vol. 26, no. 3, 1 April 2008 (2008-04-01), pages 74-86, XP011206995 ISSN: 0733-8716 * page 76, left-hand column, lines 14-19 * * page 76, left-hand column, line 47 - right-hand column, line 2 * | 4-8 | TECHNICAL FIELDS SEARCHED (IPC) H04Q |

-/--

The present search report has been drawn up for all claims

| Place of search | Date of completion of the search | Examiner |
|---|---|---|
| The Hague | 12 December 2008 | Dhondt, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches
Patentamt
European
Patent Office
Office européen
des brevets

# EUROPEAN SEARCH REPORT

**Application Number**

EP 08 10 4523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUNGCHANG KIM ET AL: "Contention resolution for optical burst switching networks using alternative routing" PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA, vol. 5, 28 April 2002 (2002-04-28), pages 2678-2681, XP010589967 ISBN: 978-0-7803-7400-3 * the whole document * | 1,12-14 | |
| X | XIAODONG HUANG ET AL: "Burst cloning: a proactive scheme to reduce data loss in optical burst-switched networks" COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 3, 16 May 2005 (2005-05-16), pages 1673-1677, XP010825567 ISBN: 978-0-7803-8938-0 * the whole document * | 1,12-14 | |
| D,A | WO 2006/072406 A (SIEMENS AG [DE]; FREIRE MARIO [PT]; GARCIA NUNO [PT]; MONTEIRO PAULO []) 13 July 2006 (2006-07-13) * the whole document * | 1-14 | TECHNICAL FIELDS SEARCHED (IPC) |

The present search report has been drawn up for all claims

| Place of search | Date of completion of the search | Examiner |
|---|---|---|
| The Hague | 12 December 2008 | Dhondt, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 10 4523

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2008

| Patent document cited in search report | | Publication date | Patent family member(s) | | Publication date |
|---|---|---|---|---|---|
| WO 2006072406 | A | 13-07-2006 | CN | 101112116 A | 23-01-2008 |

EPO FORM P0459

For more details about this annex : see Official Journal of the European Patent Office, No. 12/82

**EP 2 139 262 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006072406 A

- WO 2006072406 A1